Europäisches Patentamt

European Patent Office

Office européen des brevets

(19)

(11) Veröffentlichungsnummer: **0 172 386**
**B1**

(12) **EUROPÄISCHE PATENTSCHRIFT**

(45) Veröffentlichungstag der Patentschrift: **02.01.91**

(21) Anmeldenummer: **85108661.1**

(22) Anmeldetag: **11.07.85**

(51) Int. Cl.⁵: **C 03 B 37/02,** C 03 B 19/04, B 30 B 11/00, C 09 C 1/30

(54) **Verfahren zum Verdichten von pyrogen hergestelltem Siliciumdioxid.**

(30) Priorität: **07.08.84 DE 3429051**

(43) Veröffentlichungstag der Anmeldung:
**26.02.86 Patentblatt 86/09**

(45) Bekanntmachung des Hinweises auf die
Patenterteilung:
**02.01.91 Patentblatt 91/01**

(84) Benannte Vertragsstaaten:
**AT BE CH DE FR GB IT LI LU NL SE**

(56) Entgegenhaltungen:
**CH-A- 221 356**
**DE-A-3 217 965**
**DE-C- 570 813**
**DE-C-3 240 355**
**US-A-4 271 114**

(73) Patentinhaber: **Degussa Aktiengesellschaft**
**Weissfrauenstrasse 9**
**D-6000 Frankfurt am Main 1 (DE)**

(72) Erfinder: **Ginter, Herbert, Dr.**
**4332 Carlyle Way App. 338**
**Mobile, Al. 36609 (US)**
Erfinder: **Klingel, Reinhard, Dr.**
**Taunusstrasse 6**
**D-8755 Wasserlos (DE)**
Erfinder: **Manner, Reinhard, Dr.**
**Bonhoeferstrasse 17**
**D-6457 Maintal 1 (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zum Verdichten von pyrogen hergestelltem Siliciumdioxid (siehe z.B. DE—A1—3217965).

Zur Herstellung von Glasfasern für Lichtleitkabel werden Preßlinge aus pyrogen hergestelltem Siliciumdioxidpulver benötigt.

Diese Preßlinge müssen, um den gestellten hohen Anforderungen gerecht zu werden, die hohe Reinheit des pyrogen hergestellten Siliciumdioxides und eine hohe Verdichtung aufweisen. Die Verdichtung soll gleichmässig sein, wobei der Preßling eine genügend hohe Porosität aufweisen soll.

Die bekannten Verfahren haben den Nachteil, daß entweder ein Bindemittel zugesetzt werden muß, wodurch die hohe Reinheit des pyrogen hergestellen Siliciumdioxides verloren geht, oder aber die gewünschte Verdichtung nicht erreicht wird.

Aus dem Dokument CH—A 221 356 ist ein Verfahren bekannt, mit welchem man Gegenstände aus gesintertem Metall oder gesinterter Hartlegierung durch Verpressen in einer Zentrifugalschleuder herstellt. Die zu verdichtende Masse wird dabei in eine Form gegeben und geschleudert. Um den Druck während des Schleuderns zu erhöhen, wird auf das zu verdichtende Material eine Propfen aus Quecksilber gelegt.

Gegenstand der Erfindung ist eine Verfahren zum Verdichten von pyrogen hergestelltem Siliciumdioxid, welches dadurch gekennzeichnet ist, daß man das pyrogen hergestellte Siliciumdioxid durch Anwendung von Fliehkraft in einer Zentrifuge gegebenenfalls vorverdichtet, wobe die Zentrifugengefäße unverschlossen sind, und anschließend weiterverdichtet, wobei man die Zebtrifugengefäße jeweils mittels eines freifliegenden Kolbens, der aufgrund der Fliehkraft zusätzlichen Druck auf das zu verdichtende pyrogen hergestellte Siliciumdioxid ausübt, verschließt.

Das erfindungsgemäße Verfahren ermöglicht eine hohe Verdichtung des pyrogen hergestellen Siliciumdioxides ohne die Verwendung von zusätzlichen Bindemitteln. Das pyrogen hergestellte Siliciumdioxid behält dadurch seine hohe Reinheit. Die erhaltenen Preßlinge weisen aufgrund des verwendeten Zentrifugengefässes eine definierte Form auf, die dem speziellen Verwendungszweck angepaßt sein kann. Die Gestaltung der äusseren Form des Preßlings kann durch die entsprechende Gestaltung der inneren Form des Zentrifugengefässes geprägt werden. Zum Beispiel kann der Pressling eine zylindrische Form mit einem Verhältnis von Länge zu Durchmesser von 5 aufweisen.

Das erfindungsgemäße Verfahren stellt eine extrem schonende Verdichtung her. Durch die homogene Preßkraftverteilung wird eine gleichmässige Verdichtung in den Presslingen erzielt.

Die konsistenten Presslinge weisen eine ausreichend poröse Struktur auf, wobei sie ein Litergewicht von mindestens 300 g aufweisen.

Aufgrund des erfindungsgemäßen Verfahrens kann die in dem pyrogen hergestellten Siliciumdioxid eingeschlossene Luft ungehindert entweichen, sodaß die Presslinge keine Lufteinschlüsse aufweisen.

Die bei nach bekannten Verfahren hergestellten Presslinge auftretenden Spannungsrisse treten bei den erfindungsgemäßen Presslingen nicht auf.

Bei der Durchführung des erfindungsgemässen Verfahrens ist der Einsatz von Filtermedien nicht notwendig. Die damit verbundenen mechanischen Schwierigkeiten entfalen daher.

Die mnit dem erfindungsgemäßen Verfahren hergestellten Preßlinge aus pyrogen hergestellten Siliciumdioxid können vorteilhaft bei der Herstellung von Glasfasern für z.B. Lichtleitkabel verwendet werden.

Beispiel

Ein pyrogen hergestelltes Siliciumdioxid mit einer spez. Oberfläche von 50 g/m² (Handelsname AEROSIL OX 50 Degussa) wird in die Becher einer Becherzentrifuge eingefüllt. Die Abmessungen der 4 Glasbecher der Becherzentrifuge betragen im Innendurchmesser ca. 38 mm und in der Länge ca. 100 mm mit einem Volumen von 100 cm³. Die erreichbaren max. Schleuderziffern betragen bei dieser Zentrifuge 4000.

Die Anfangsdichte dieses Siliziumdioxides beträgt 20 g/l. Dieses Siliciumdioxid wird unter Zentrifugalkraft verdichtet. Dabei wird das Produkt bei einer mittl. Schleuderziffer von ca. 3200 auf eine mittl. Dichte von ca. 200 g/l verdichtet. Die Schleuderdauer beträgt 60 sec.

Dieses so vorverdichtete Produkt wird anschließend mit freifliegenden Kolben aus Stahl (p = 7,86 kg/dm³) nachverdichtet. Die Durchmesser der Kolben betragen 37 mm und ihre Höhe 20 mm.

Die Kolben werden in die Bechergläser eingeschoben, bis die Kolben das vorverdichtete Produkt berühren. Dann wird die Zentrifuge erneut in Betrieb gesetzt, wobei die Kolben nach aussen wandern und dabei das pyrogen hergestellte Siliziumdioxid nachverdichten.

Dabei ergibt sich rechnerisch bei einem mittl. Radius von ca. 90 mm und einer Drehzahl der Zentrifuge von 4100 1/min eine Schleurderziffer für die Verdichterkolben von ca. 1700 und damit ein Verdichtungsdruck von 26,7 bar. Die Schleuderzeit beträgt zur Erlagung homogener Preßlinge ca. 5 Minuten.

Das Siliziumdioxid hat nach der Verdichtung eine mittl. Endichte von 500 bis 530 g/l. Es platzt nach der Entnahme der Kolben nicht auf, sondern bleibt ein homogener Preßkörper. Durch den relativ breiten Spalt von ca. 0,5 mm zwischen Verdichterkolben und Glasbecher ist nur eine geringe Menge pulverförmigen Stoffes gedrungen.

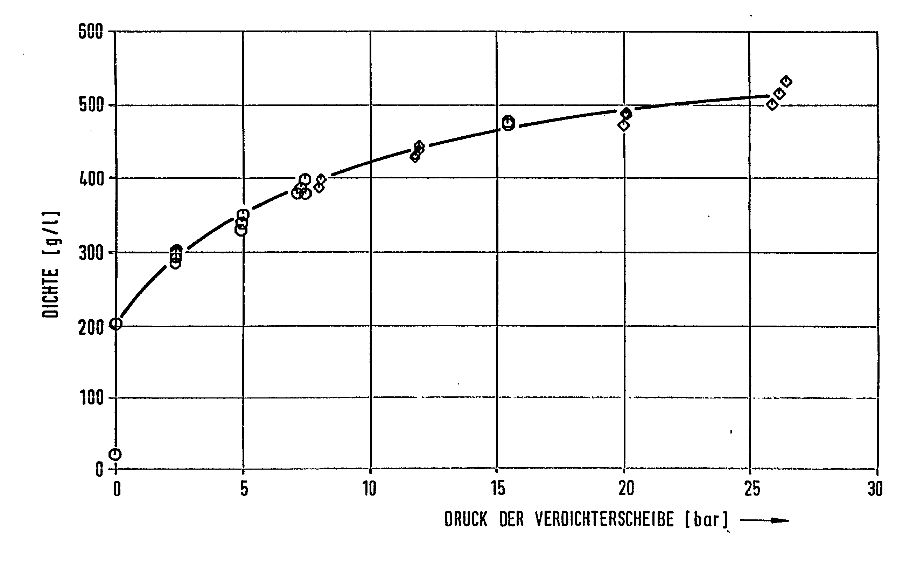

Die Abhängigkeit er erreichbaren Enddichte vom Preßdruck des Verdichterkolbens ist in Figur 1 dargestellt.

**Patentansprüche**

1. Verfahren zum Verdichten von pyrogen hergestelltem Siliciumdioxid, dadurch gekennzeichet, daß man pyrogen hergestelltes Siliciumdioxid durch Anwendung von Fliehkraft in einer Zentrifuge gegebenenfalls vorverdichtet, wobei die Zentrifugengefäße unverschlossen sind, und anschließend weiterverdichtet, wobei man die Zentrifugengefäße jeweils mittels eines freifliegenden Kolbens, der aufgrund der Fliehkraft zusätzlichen Druck auf das zu verdichtenden pyrogen hergestellte Siliciumdioxid ausübt, verschließt.

2. Verwendung des nach dem Verfahren gemäß Anspruch 1 verdichtenden pyrogen hergestellten Siliciumdioxides zur Herstellung von Glasfasern für Lichtleitkabel.

**Revendications**

1. Procédé pour la densification de silice produite par pyrogénation, caractérisé en ce que, éventuellement, on soumet à une pré-densification, par appliation de force centrifuge dans une centrifugeuse, de la silice produit par pyrogénation, les récipients de centrifugation n'étant pas fermés, et on la densifie davantage ensuite, en fermant les récipients de centrifugation chacun au moyen d'un piston libre, qui, en raison de la force centrifuge, exerce une pression supplémentaire sur la silice à densifier, produit par pyrogénation.

2. Utilisation de la silice produite par pyrogénation, densifiée par le procédé selon la revendication 1, pour la fabrication de fibres de verre pour câble à fibres optiques.

**Claims**

1. Process for compacting pyrogenically prepared silicon dioxide, characterised in that pyrogenically prepared silicon dioxide is optionally precompacted by the application of centrifugal force in a centrifuge in which the centrifuge vessels are open and the silicon dioxide is then further compacted while the centrifuge vessels are each closed by a free floating piston which as a result of the centrifugal force exerts additional pressure on the pyrogenically prepared silicon dioxide which is to be compacted.

2. Use of the pyrogenically prepared silicon dioxide which has been compacted by the process according to Claim 1 for the production of glass fibres for optical fibre cables.

DICHTE [g/l]

DRUCK DER VERDICHTERSCHEIBE [bar] ——